(19) Europäisches Patentamt
European Patent Office
Office européen des brevets

(11) EP 1 449 875 B1

(12) # EUROPÄISCHE PATENTSCHRIFT

(45) Veröffentlichungstag und Bekanntmachung des Hinweises auf die Patenterteilung:
**04.01.2006 Patentblatt 2006/01**

(51) Int Cl.:
***C08L 19/00*** *(2006.01)* ***C08C 19/22*** *(2006.01)*
***C08F 279/02*** *(2006.01)*

(21) Anmeldenummer: **04002753.4**

(22) Anmeldetag: **07.02.2004**

(54) **Vernetzte - durch Amino(meth)acrylatgruppen modifizierte Kautschukpartikel**

Crosslinked rubber particles modified with amino(meth)acrylate groups

Particules de caoutchouc réticulées, modifiées avec de groupes amino(meth)acrylates

(84) Benannte Vertragsstaaten:
**DE FR GB IT**

(30) Priorität: **20.02.2003 DE 10307139**

(43) Veröffentlichungstag der Anmeldung:
**25.08.2004 Patentblatt 2004/35**

(73) Patentinhaber: **LANXESS Deutschland GmbH**
**51369 Leverkusen (DE)**

(72) Erfinder:
- **Obrecht, Werner, Prof. Dr.**
**47447 Moers (DE)**
- **Köhler, Burkhard Dr.**
**51373 Leverkusen (DE)**
- **Jeske, Winfried**
**51399 Burscheid (DE)**

(56) Entgegenhaltungen:
**EP-A- 0 473 972** **EP-A- 1 063 259**
**EP-A- 1 152 030** **US-A- 4 714 532**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 449 875 B1

Printed by Jouve, 75001 PARIS (FR)

## Beschreibung

Die vorliegende Erfindung betrifft vernetzte, durch sekundäre Amine-(meth)-acrylatgruppen modifizierte Kautschukpartikel, ein Verfahren zu deren Herstellung, deren Verwendung zur Herstellung von Kautschukvulkanisaten oder Kautschukformkörpern aller Art sowie die Kautschukvulkanisate oder Kautschukformkörper, die aus den Kautschukpartikeln erhältlich sind.

Es ist bekannt, vernetzte Kautschukpartikel (sogenannte Kautschukgele) als Füllstoffe mit verstärkender Wirkung in Kombination mit unvernetzten Kautschuken zur Herstellung von Vulkanisaten einzusetzen. Durch den Einsatz solcher Kautschukgele als Füllstoffe bei der Herstellung von Kautschukvulkanisaten wird insbesondere der Spannungswert bei 300 % Dehnung, die Bruchdehnung, die Reißfestigkeit als auch der Abrieb der Vulkanisate bzw. der daraus hergestellten Formkörper, z. B. Reifen, verbessert. Darüber hinaus besitzen mit Kautschukgelen auf Polybutadienbasis versetzte Vulkanisate über einen weiten Temperaturbereich niedrige Rückprallelastizitäten (niedrige Hystereseverluste). Kautschukgele auf Basis von Styrol/Butadien-Kautschuken zeichnen sich durch eine niedrige Rückprallelastizität bei Raumtemperatur (gutes Nassrutschverhalten) und eine hohe Rückprallelastizität bei 70°C (niedriger Rollwiderstand) aus.

Aufgrund der Eigenschaftsverbesserungen, die durch den Einsatz von Kautschukgelen bei der Herstellung von Vulkanisaten bzw. Kautschukformkörpern erzielt werden, hat es nicht an Versuchen gefehlt, die bislang bekannten Kautschukgele ständig zu verbessern bzw. zu optimieren, um deren physikalische Wirkung bei der Herstellung von Vulkanisaten bzw. Kautschukformkörpern noch zu steigern.

Die mit den erfindungsgemäßen vernetzten, durch sekundäre Amino-(meth)-acrylatgruppen modifizierten Kautschukpartikel hergestellten Kautschukformkörper bzw. Kautschukvulkanisate zeichnen sich insbesondere dadurch aus, dass sie verbesserte mechanische Eigenschaften vor allem eine Verbesserung des Produktes aus Spannungswert bei 300 % Dehnung und Bruchdehnung ($\sigma_{300}$ x $\varepsilon_b$) aufweisen, insbesondere wenn für die Vernetzung multifunktionelle Sulfonylazide zusätzlich zu den für eine Schwefelvernetzung üblichen Chemikalien eingesetzt werden und dass in kieselsäurehaltigen Mischungen eine Reduktion der Menge an Bis-(triethoxysilyl-propyl-3)-tetrasulfid durch Verwendung von multifunktionellem Sulfonylazid ohne Einbußen im Produkt $\sigma_{300}$ x $\varepsilon_b$ gelingt.

Es bestand daher die Aufgabe, die beschriebenen physikalischen Eigenschaften der mit Kautschukgelen hergestellten Mischungen, bzw. Vulkanisate und Formkörper zu verbessern, insbesondere das Produkt aus Spannungswert bei 300 % Dehnung und Bruchdehnung ($\sigma_{300}$ x $\varepsilon_b$) zu verbessern und zum anderen dafür zu sorgen, dass gel- und kieselsäurehaltige Kautschukmischungen und die hieraus hergestellten Vulkanisate auf wirtschaftliche Weise zugänglich sind, toxisch unbedenklich sind sowie dass eine gute Kopplung der Kautschukgele und der Kieselsäure an die Kautschukmatrix gewährleistet wird verbunden mit einer raschen und wirtschaftlichen Vulkanisation.

Es wurde nun gefunden, dass die erfindungsgemäßen, nachstehend näher beschriebenen Kautschukgele, die durch sekundäre Amino-(meth)-acrylatgruppen modifiziert sind, zur Lösung der beschriebenen Aufgaben beitragen, wobei sich überraschenderweise herausstellte, dass es mit den erfindungsgemäßen modifizierten Kautschukgelen sogar möglich ist, bei Verwendung von hellen Füllstoffen, wie Kieselsäuren, die Menge an Silan-Kopplungsmitteln in nicht unbeträchtlicher Weise zu senken, ohne die physikalischen Eigenschaften der Vulkanisate negativ zu beeinflussen.

Gegenstand der vorliegenden Erfindung sind daher vernetzte, durch sekundäre Amino-(meth)-acrylatgruppen modifizierte Kautschukpartikel, welche gekennzeichnet sind durch einen Teilchendurchmesser von 5 bis 500 nm, einen Quellungsindex in Toluol von 1 bis 25, einen Gelgehalt von 80 bis 100 Gew.-% und einer Menge an sekundären Amino-(meth)-acrylatgruppen von 0,5 bis 10 Gew.-%, jeweils bezogen auf 100 Gew.-% Kautschukgel.

Bevorzugte, erfindungsgemäße Kautschukpartikel sind solche, die einen Teilchendurchmesser von 10 bis 500 nm, insbesondere 20 bis 400 nm, einen Quellungsindex in Toluol von 1 bis 25, insbesondere 1 bis 15, einen Gelgehalt von 80 bis 100, insbesondere 90 bis 100 Gew.-% und eine Menge an sekundären Amino-(meth)-acrylatgruppen von 0,5 bis 10, insbesondere 1 bis 5 Gew.-%, besitzen.

Als sekundäre Amino-(meth)-acrylatgruppen, die als modifizierende Gruppierungen in den Kautschukgelen erfindungsgemäß vorhanden sind, kommen solche in Betracht, die sich von sekundären Amino-(meth)-acrylsäureestern der allgemeinen Formel (I)

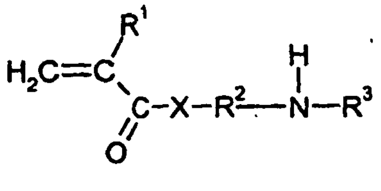

(I)

worin

$R^1$ für Wasserstoff oder Methyl,
X für -O- oder -NH-,
$R^2$ für einen $C_2$- bis $C_6$-Alkylenrest, vorzugsweise für $-CH_2-CH_2-$

und

$R^3$ für einen $C_1$- bis $C_{18}$-Alkylrest, vorzugsweise für tert.-Butyl, oder einen $C_7$-bis $C_{20}$-Aralkyl- oder Arylalkylrest oder einen $C_6$- bis $C_{10}$-Alkylrest

ableiten und die durch Copolymerisation beziehungsweise durch Umsetzung mit den dem Fachmann bekannten Kautschukgelen erhalten werden.

Besonders bevorzugt sind solche sek-Amino-(meth)-acrylsäureester, in denen

$R^1$ für Methyl,
X für ein Sauerstoffatom,
$R^2$ für einen 1,2-Ethylidenrest und
$R^3$ für tert-Butyl

stehen.

Als sekundäre Amino-(meth)-acrylsäureester der obigen Formel sind insbesondere namentlich folgende zu nennen:
2-tert-Butylaminoethylmethacrylat und 2-tert-Butylaminoethylmethacrylamid,
ganz besonders bevorzugt 2-tert-Butylaminoethylmethacrylat.

Die vernetzten modifizierten Kautschukgele basieren auf folgenden Kautschuken:

| | |
|---|---|
| BR: | Polybutadien, |
| ABR: | Butadien/Acrylsäure-$C_{1-4}$-Alkylestercopolymere, |
| IR: | Polyisopren, |
| SBR: | Styrol-Butadien-Copolymerisate mit Styrolgehalten von 1-60, vorzugsweise 5-50 Gewichtsprozent, |
| X-SBR: | carboxylierte Styrol-Butadien-Copolymerisate |
| FKM: | Fluorkautschuk, |
| ACM: | Acrylatkautschuk, |
| NBR: | Butadien-Acrylnitril-Copolymerisate mit Acrylnitrilgehalten von 5-60, vorzugsweise 10-50 Gewichtsprozent, |
| X-NBR: | carboxylierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichisprozent, |
| CIIR: | chlorierte Isobutylen/Isopren-Copolymerisate mit einem Chlorgehalt von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO.und ECO: | Epichlorhydrinkautschuke, |
| Q: | Silikonkautschuke, |
| AU: | Polyesterurethanpolymerisate, |
| EU: | Polyetherurethanpolymerisate. |
| NR: | Naturkautschuk |

Bevorzugt sind solche Kautschukgele die auf BR, SBR, NBR, CR, IR und NR basieren. Insbesondere sind Kautschukgele bevorzugt, die auf BR, SBR und NBR basieren.

Der bei den erfindungsgemäßen Kautschukpartikeln angegebene Teilchendurchmesser wird mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, S. 782. Die Durchmesserangaben erfolgen nach DIN 53 206, wobei der Median- oder Zentralwert $d_{50}$ als der Durchmesser definiert ist, oberhalb und unterhalb dessen, jeweils die Hälfte aller Teilchengrößen liegt. Der Medianwert entspricht dem Durchmesser, bei dem die Summenformel den Wert 0,5 erreicht.

Gelgehalt und Quellungsindex von Kautschukgelen werden an einer trockenen Probe dadurch ermittelt, dass

man 250 mg des Kautschukgels in 25 ml Toluol 24 h unter Schütteln bei Raumtemperatur quillt. Das Gel wird bei 20.000 Upm abzentrifugiert und feucht gewogen, anschließend bei 70°C bis zur Gewichtskonstanz getrocknet und nochmals gewogen. Der Gelgehalt wird aus der Menge des getrockneten Polymers bezogen auf das eingesetzte Polymer berechnet und in Gew.-% angegeben. Der Quellungsindex $Q_i$ wird aus dem Verhältnis Nassgewicht des Gels/Trockengewicht des Gels berechnet.

Die Menge an sekundären Amino-Arylatgruppen wird elementaranalytisch über den Stickstoffgehalt bestimmt.

Ein weiterer Gegenstand der vorliegenden Erfindung, ist die Herstellung der vernetzten, durch sekundäre Amino-(meth)-acrylatgruppen modifizierten Kautschukpartikel (Gele). Im wesentlichen erfolgt die Gelherstellung durch folgende Verfahren.

I. Bei der Direktpolymerisation werden ethylenisch ungesättigte Monomere wie Styrol und Acrylnitril mit konjugierten Dienen wie Butadien und/oder Isopren mit Vernetzern auf der Basis multivinylhaltiger Monomerer und dem Amino-(meth)acrylat copolymerisiert.

II. Bei der nachträglichen Modifikation werden die modifizierten Kautschukgele hergestellt, indem man in bekannter Weise die den Gelen zugrunde liegenden Kautschuke bevorzugt in wässriger Dispersion vernetzt und nach Erreichen des gewünschten Vernetzungsgrades die erhaltenen Kautschukgele mit den zuvor beschriebenen sekundären Amino-(meth)-acrylsäureestern der Formel (I) umsetzt bzw. modifiziert.

Bei der Herstellung der vernetzten, durch Amino(meth)acrylatgruppen modifizierten Kautschukpartikel durch Direktpolymerisation setzt man folgende Monomer-mischungen ein:

A: Diene wie Butadien und Isopren
B: Monovinylverbindungen wie Styrol, Acrylnitril, $\alpha$-Methylstyrol und p-Methylstyrol
C: Multivinylhaltige Monomere wie Divinylbenzol, Diisopropenylbenzol, Divinylether, Divinylsulfon, Diallylphthalat, Triallylcyanurat, Triallylisocyanurat, N, N'-m-Phenylenmaleindiimid, Triallyltrimellitat, Acrylate und Methacrylate von multifunktionellen 2- bis 4-wertigen Alkoholen wie Ethylenglykol, Propandiol-1,2, Hexandiol, Polyethylenglykol, mit 2 - 20, vorzugsweise mit 2 - 8 Oxymethylen-einheiten, Neopentylglykol, Bisphenol A, Glycerin, Trimethylolpropan, Pentaerythrit, Sorbit sowie ungesättigte Polyester auf der Basis aliphatischer Diole und Polyole sowie Maleinsäure, Fumarsäure und/oder Itaconsäure
D: Amino(meth)acrylate.

Jeweils bezogen auf 100 Gew.-Teile Monomere setzt man folgende Mengen der genannten Monomeren ein:

A: 10-90 Gew.-Teile
B: 0-70 Gew.-Teile
C: 0,5-20 Gew.-Teile
D: 0,5-20, vorzugsweise 0,5-10 besonders bevorzugt 1,5 Gew.-Teile.

Die Monomeren werden in den genannten Gewichtsverhältnissen copolymerisiert, wobei das bevorzugte Polymerisationsverfahren die radikalische wässrige Emulsionspolymerisation ist. Die Polymerisation wird batchweise oder kontinuierlich durchgeführt.

Die Polymerisation wird bei Normaldruck und insbesondere in Anwesenheit von Butadien unter erhöhtem Druck durchgeführt.

Die Polymerisationstemperatur beträgt in der Regel 0 bis 100°C. Höhere Temperaturen bis 130°C sind möglich. Die Polymerisationstemperaturen richten sich insbesondere nach der Art der verwendeten Radikalbildner und der Druckfestigkeit der zur Verfügung stehenden Reaktoren.

Für die Durchführung der Emulsionspolymerisation werden Emulgatoren und/oder Schutzkolloide in einer Menge von 0,05-15 Gew.-%, bevorzugt 1-10 Gew.-% bezogen auf 100 Gew.-Teile

Gesamtmonomere eingesetzt.

Geeignete Emulgatoren sind dem Fachmann bekannt. Sie sind beispielsweise beschrieben in Houben-Weyl, Methoden der organischen Chemie, Band IX/1, Makromolekulare Stoffe, Seiten 192-208 sowie Seiten 411-420, Georg Thieme Verlag Stuttgart 1961. Es sind sowohl kationische, anionische und nichtionische Emulgatoren geeignet. Vorzugsweise werden anionische Emulgatoren eingesetzt. Geeignete anionische Emulgatoren sind die Salze von $C_8$-$C_{18}$ Fettsäuren sowie der entsprechenden dimerisierten Fettsäuren mit Alkalimetallen wie Natrium, Kalium und Ammonium sowie mit flüchtigen Aminen, wie Triethylamin, Diethanolamin, Triethanolamin etc. Weitere geeignete anionische Emulgatoren sind beispielsweise Alkali- und Ammoniumsalze von Alkylsulfaten, Alkylsulfonaten und Alkylarylsulfonaten mit $C_8$-$C_{22}$ -Alkylresten, modifizierte Harzsäuren wie disproportionierte, hydrierte und dimerisierte Harzsäure, sowie ethoxylierte Alkanole und ethoxylierte Alkylphenole mit Ethoxylierungsgraden 2 - 50. Bevorzugte Emulgatoren sind die Na-

und K- Salze von disproportionierten Harzsäuren, die Na- und K-Salze von Palmitin-, Stearin- und Ölsäure, Alkylsulfonate sowie un- bzw. teilhydrierte Talgfettsäuren.

Geeignete Schutzkolloide finden sich in Houben-Weyl, Methoden der organischen Chemie, Band IX/1, Makromolekulare Stoffe, Seiten 192-208 sowie Seiten 411-420, Georg Thieme Verlag Stuttgart 1961. Bevorzugt werden Phenol- und Naphthalinsulfonsäure-Formaldehyd-Kondensate wie z. B. Baykanol® PQ der Bayer AG bzw. die Tamol®-Marken der BASF eingesetzt. Geeignete Mengen sind 0,1-2 Gew.-% bez. auf 100 Gew.-Teile der Gesamtmenge an Monomeren.

Als Radikalinitiatoren werden sämtliche unter Polymerisationsbedingungen in Radikale zerfallende Verbindungen eingesetzt wie z.B. Peroxide, Hydroperoxide Wasserstoffperoxid, Persulfate, Perphosphate und Azoverbindungen. Geeignete organische Peroxide sind in EP-A 536 597 beschrieben. Besonders geeignet sind Wasserstoffperoxid, Na-, K- und Ammoniumsalze von Peroxodisulfat, p-Menthanhydroperoxid, t-Butylhydroperoxid. Die genannten Radikalinitiatoren werden in Mengen von 0,01 bis 5, vorzugsweise 0,1 bis 3,0 Gew.-% bezogen auf die Gesamtmenge der Monomeren eingesetzt.

Durch Kombination der genannten Radikalbildner mit geeigneten Reduktionsmitteln erhält man sogenannte Redoxsysteme bzw. Redoxkatalysatoren, die eine Absenkung der Temperatur, bei der diese Radikalbildner erfolgreich eingesetzt werden, ermöglichen, beispielsweise auf 5-30°C.

Geeignete Reduktionsmitteln sind Amine wie Di-ethanolamin, Tri-ethanolamin, Di-n-butylamin, Tri-n.-butylamin, Dithiocarbamate wie Dimethyldithiocarbamat, Di-n-Butyldithiocarbamat, Di-n-Propyldithiocarbamat, Xanthogenate wie Ethylxanthogenat, Butylxanthogenat, Hexylxanthogenat, 2-Ethyl-hexyl-xanthogenat, Dithionit, Sulfit, Bisulfit, Thiosulfat, Hydrazin, Hydroxylamin, Hydrochinon, Perthiocarbonat, Ascorbinsäure, Glukose, Sorbose, Hydroxylamin, Acetonbissulfitaddukte sowie Salze der Hydroxymethansulfinsäure wie z. B. Rongalit® C der BASF.

Bei Verwendung von Redoxkatalysatoren setzt man zweckmäßigerweise zusätzlich wasserlösliche Salze von Übergangsmetallen wie Eisen, Cobalt, Nickel, Silber und Vanadin, zweckmäßigerweise in Kombination mit geeigneten Komplexbildnern wie Ethylendiamintetraessigsäure und Nitrilotriessigsäure ein, damit die Metallsalze in wässrig alkalischem Milieu gelöst vorliegen. Bevorzugte Redoxsyxsteme sind P-Menthanhydroperoxid/Hydroxymethansulfinat/Fe(II)Sulfat (komplexiert mit Nitrilotriessigsäure), K-Peroxodisulfat/Tri-ethanolamin/Fe(II)Sulfat (komplexiert mit Nitrilotriessigsäure), K-Peroxodisulfat/Ascorbinsäure/Fe(II)Sulfat (komplexiert mit Nitrilotriessigsäure).

Weiterhin können sogenannte Kettenüberträger zur Regelung des Molgewichts eingesetzt werden. Häufig haben diese Regler zusätzlich eine aktivierende Wirkung auf die zuvorgenannten Radikalbildner. Bevorzugt sind aliphatische, gerad- oder verzweigtkettige Mercaptane in einer Menge von 0,05-2 Gew.-%.

Der Feststoffgehalt der Dispersion beträgt 5-60 Gew.-% bevorzugt 10-50 Gew.-%.

Gegebenenfalls kann es erforderlich sein, die wässrige Dispersion der Kautschukteilchen im Anschluss an die Polymerisation weitgehend frei von Geruchsträgern wie Restmonomere und anderen organisch flüchtigen Bestandteilen zu gestalten. Dies kann in bekannter Weise physikalisch durch destillative Entfernung (insbesondere durch Wasserdampfdestillation) oder durch Durchleiten eines inerten Gases z. B. Stickstoff sowie chemisch durch Nachpolymerisation, insbesondere durch Einwirkung von Redoxinitiatoren erfolgen.

Bei der nachträglichen Modifikation werden die modifizierten Kautschukgele hergestellt, indem man in bekannter Weise die den Gelen zugrunde liegenden Kautschuke bevorzugt in wässriger Dispersion vernetzt und nach Erreichen des gewünschten Vernetzungsgrades die erhaltenen Kautschukgele mit den sekundären Amino-(meth)-acrylsäureestern der Formel (I) umsetzt bzw. modifiziert.

Die Vernetzung der Kautschukpartikeln aus den zugrundeliegenden Kautschuken, der zuvor genannten Art ist prinzipiell bekannt und beispielsweise beschrieben in US-A 5 395 891 und US 6 127 488.

Die Modifizierung der Kautschukgele ist ebenfalls bekannt und beispielsweise beschrieben in den deutschen Patentanmeldungen Nr. 199 19 459.9, 10038488.9 und 10039749.

Eine vorteilhafte Ausführungsform zur Herstellung der erfindungsgemäßen vernetzten, durch sekundäre Amino-(meth)-acrylatgruppen modifizierten Kautschukgele beruht darauf, dass man zunächst den als Latex zugrundeliegenden Kautschuk mit einer Verbindung umsetzt, die eine vernetzende Wirkung auf den un- bzw. schwach vernetzen Kautschuk hat. Vorzugsweise führt man diese Reaktion an einem Kautschuk durch, der in wässriger Dispersion (Latex) vorliegt. Anschließend setzt man den erhaltenen, vernetzten Kautschuk-Latex mit dem sekundären Amino-(meth)-acrylsäureester in Gegenwart eines Radikalbildners um und erhält nach erfolgter Umsetzung das nunmehr modifizierte Kautschukgel.

A (für die Herstellung der Kautschukgele)

Üblicherweise setzt man für die Vernetzung der Kautschuke folgende Verbindungen ein: Organische Peroxide wie Dicumylperoxid, t-Butylcumylperoxid, Bis-(t-Butyl-Peroxoisopropyl)-Benzol, Di-t-Butylperoxid, Dibenzoylperoxid, Bis-/2,4-Dichlorbenzoylperoxid, t-Butylperbenzoat, organische Azoverbindungen wie, Azo-bis-Isobutyronitril (AIBN), Azo-bis-Divaleronitril, Azo-bis-Cyclohexannitril sowie Dimercapto- bzw. Polymercapto-Verbindungen wie 1,2-Dimercaptoethan, 1,6-Dimercaptohexan, 1,3,5-Trimercaptotriazin und mercaptoterminierte Polysulfidkautschuke wie mercaptoterminierte Reaktionsprodukte von Bischloroethylformal mit Natrium-Polysulfid. Die Temperatur für die Durchführung der Vernetzungsreaktion hängt von der Reaktivität des eingesetzten Vernetzungsmittels ab und wird im Temperaturbereich Raumtemperatur 20 bis 180°C durchgeführt. Bei Verwendung von Dicumylperoxid arbeitet man im Bereich 140°C bis 190°C, wobei 150°C bis 170°C bevorzugt sind. Die Zeiten orientieren sich an den Halbwertszeiten für den Zerfall der entsprechenden Radikalbildner, wobei man üblicherweise von 4-8 Halbwertszeiten bei den entsprechenden Temperaturen ausgeht. Zweckmäßigerweise erhöht man die Reaktionstemperatur nach Ablauf von 4-8 Halbwertszeiten um den quantitativen Umsatz sicherzustellen.

Für die Pfropfung der vernetzten Kautschukgele geht man von den Latices aus, wobei man im ersten Schritt die gewünschte Menge an Amino-(meth)acrylat zum Latex gibt und durch Zusatz eines Radikalbildners polymerisiert.

Als Radikalbildner werden die zuvor im Zusammenhang mit der "Direktpolymerisation" genannten Radikalbildner insbesondere die genannten "Redoxsysteme" eingesetzt.

Ein weiterer Gegenstand der vorliegenden Erfindung ist die Verwendung der erfindungsgemäßen, modifizierten Kautschukpartikel/Gele zur Herstellung von Kautschukvulkanisaten, die durch entsprechende Vernetzungsreaktion (Vulkanisation) mit den bekannten Vernetzungs- (bzw. Vulkanisations)agenzien, bevorzugt in Kombination mit polyfunktionellen Sulfonylaziden erhalten werden und zur Herstellung von Formkörpern aller Art, besonders zur Herstellung von Reifen und Reifenbauteilen, sowie von technischen Gummiartikeln und Golfbällen, dienen.

Bei der Verwendung der erfindungsgemäßen Kautschukgele zur Herstellung von Kautschukvulkanisaten oder Kautschukformkörpern werden zunächst entsprechende Kautschukmischungen hergestellt, die neben den erfindungsgemäßen modifizierten Kautschukpartikel noch nicht vernetzte, doppelbindungshaltige Kautschuke enthalten, die nach DIN/ISO 1629 als R-Kautschuke bezeichnet werden und in der Hauptkette eine Doppelbindung besitzen. Hierzu gehören beispielsweise:

| | |
|---|---|
| NR: | Naturkautschuk |
| SBR: | Styrol/Butadienkautschuk |
| BR: | Polybutadienkautschuk |
| NBR: | Nitrilkautschuk |
| IIR: | Butylkautschuk |
| BIIR: | bromierte Isobutylen/Isopren-Copolymerisate mit Bromgehalten von 0,1-10 Gewichtsprozent |
| CIIR: | chlorierte Isobutylen/Isopren-Copolymerisate mit einem Chlorgehalt von 0,1-10 Gewichtsprozent |
| HNBR: | Hydrierter bzw. teilhydrierter Nitrilkautschuk |
| SNBR: | Styrol/Butadien/Acrylnitiril-Kautschuk |
| CR: | Polychloropren |
| ENR: | Epoxydierter Naturkautschuk oder Mischungen davon |
| X-NBR: | carboxylierte Nitrilkautschuke |
| X-SBR: | carboxylierte Styrol-Butadien-Copolymerisate. |

Unter doppelbindungshaltigen Kautschuken sollen aber auch solche Kautschuke verstanden werden, die nach DIN/ISO 1629 als M-Kautschuke bezeichnet werden und neben der gesättigten Hauptkette Doppelbindungen in der Seitenkette aufweisen. Hierzu gehört z.B. EPDM.

Zur Herstellung von Kautschukvulkanisaten bzw. Kautschukformkörpern kommen erfindungsgemäß insbesondere solche Kautschukmischungen in Betracht, die aus nicht vernetzten, doppelbindungshaltigen Kautschuken der beschriebenen Art (Mischungskomponente I) und aus vernetzten, erfindungsgemäß mit Amino(meth)acrylaten modifizierten Kautschukpartikeln (Mischungskomponente II) bestehen, wobei der Anteil der in der Mischung enthaltenen Kautschukgele 1 bis 150 Gew.-Teile, bevorzugt 5 bis 70 Gew.-Teile, und der Anteil an nicht vernetzten doppelbindungshaltigen Kautschuken 100 Gew.-Teile beträgt.

Selbstverständlich können die Kautschukmischungen die bekannten Kautschukhilfsmittel und Füllstoffe enthalten. Besonders geeignete Füllstoffe zur Herstellung von Kautschukmischungen bzw. Vulkanisate sind z.B.:

- Ruße. Die hierbei zu verwendenden Ruße sind nach dem Flammruß-, Furnace- oder Gasrußverfahren hergestellt und besitzen BET-Oberflächen von 20-200 $m^2/g$ wie z. B.: SAF-, ISAF-, IISAF-, HAF-, FEF- oder GPF-Ruße.
- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 $m^2/g$ (BET-Oberfläche) und Primärteilchengrößen von 5-400 nm. Die Kieselsäuren können ggf. auch als Mischoxide mit anderen Metalloxiden, wie Al-, Mg-, Ca-, Ba, Zn- und Ti Oxiden vorliegen.
- synthetische Silikate, wie Aluminiumsilikat, Erdalkalisilikat, wie Magnesiumsilikat oder Calciumsilikat mit BET-Oberflächen von 20-400 $m^2/g$ und Primärteilchendurchmessem von 5-400 nm.
- natürliche Silikate, wie Kaolin und andere natürlich vorkommende Kieselsäuren.

- Metalloxide, wie Zinkoxid, Calciumoxid, Magnesiumoxid, Aluminiumoxid.
- Metallcarbonate, wie Calciumcarbonat, Magnesiumcarbonat, Zinkcarbonat.
- Metallsulfate, wie Calciumsulfat, Bariumsulfat.
- Metallhydroxide, wie Aluminiumhydroxid und Magnesiumhydroxid.
- Glasfasern und Glasfaserprodukte (Latten, Stränge oder Mikroglaskugeln).
- Thermoplastfasern (Polyamid, Polyester, Aramid).

Die Füllstoffe können in Mengen von 0,1 bis 100 Gew.-Teilen, bezogen auf 100 Gew.-Teile der nicht vernetzten doppelbindungshaltigen Kautschukkomponenten eingesetzt werden.

Die genannten Füllstoffe können allein oder im Gemisch untereinander eingesetzt werden.

Besonders bevorzugt sind Kautschukmischungen, die 5 bis 100 Gew.-Teile an vernetzten erfindungsgemäßen Kautschukpartikeln, 0,1 bis 100 Gew.-Teile Ruß und/oder 0,1 bis 100 Gew.-Teilen an sogenannten hellen Füllstoffen der oben genannten Art, jeweils bezogen auf 100 Gew.-Teile an unvernetzter Kautschukkomponente, enthalten. Dabei beträgt die Menge an Füllstoffen bei Einsatz eines Gemisches aus Ruß und hellen Füllstoffen maximal ca. 150 Gew.-Teile.

Die Kautschukmischungen können - wie erwähnt - weitere Kautschukhilfsmittel enthalten, wie Vernetzer, Vulkanisationsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachs, Streckmittel, organische Säuren, Verzögerer, Metalloxide, sowie Füllstoffaktivatoren, wie Triethanolamin, Polyethylenglykol, Hexantriol, Bis-(triethoxysilylpropyl)-tetrasulfid. Die Kautschukhilfsmittel sind beispielsweise beschrieben in J. van Alphen, W.J.K. Schönbau, M. van Tempel Gummichemikalien, Berliner Union GmbH Stuttgart 1956 (gesamtes Buch) sowie in Handbuch für die Gummiindustrie, Bayer AG, 2. Auflage, 1991, S. 353 -620.

Die Kautschukhilfsmittel werden in üblichen Mengen, die sich u.a. nach dem Verwendungszweck richten, eingesetzt. Übliche Mengen sind beispielsweise 0,1 bis 50 Gew.-Teile, bezogen auf 100 Gew.-Teile unvernetztern Kautschuk.

Darüber hinaus können die erfindungsgemäßen Kautschukmischungen noch übliche Vernetzer wie Schwefel, Schwefelspender, Peroxide oder andere Vernetzungsmittel, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenbismaleinimid und/oder Triallyltrimellitat enthalten. Außerdem kommen noch in Betracht die Acrylate und Methacrylate von mehrwertigen, vorzugsweise 2 bis 4-wertigen $C_2$- bis $C_{10}$-Alkoholen, wie Ethylenglykol, Propandiol-1,2, Butandiol, Hexandiol, Polyethylenglykol mit 2 bis 20, vorzugsweise 2 bis 8, Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure und/oder Itaconsäure.

Bevorzugt werden als Vernetzer eingesetzt: Schwefel und Schwefelspender in den bekannten Mengen, beispielsweise in Mengen von 0,1 bis 10 Gew.-Teilen, bevorzugt 0,1 bis 5 Gew.-Teilen, bezogen auf 100 Gew.-Teile an unvernetzter Kautschukkomponente.

Die erfmdungsgemäßen Kautschukmischungen können darüber hinaus noch Vulkanisationsbeschleuniger der bekannten Art enthalten, wie Mercaptobenzothiazole, Mercaptosulfenamide, Guanidine, Thiurame, Dithiocarbamate, Thioharnstoffe, Thiocarbonate und/oder Dithiophosphate. Die Vulkanisationsbeschleuniger werden ebenso wie die Vernetzer in Mengen von ca. 0,1 bis 10 Gew.-Teilen, bevorzugt 0,1 bis 5 Gew.-Teilen, bezogen auf 100 Gew.-Teile an unvernetzter Kautschukkomponente eingesetzt.

Bei der Vulkanisation von Kautschukmischungen mit den erfindungsgemäß modifizierten Kautschukpartikeln hat sich der Zusatz von multifunktionellen Sulfonylaziden als weiteres Vernetzungsmittel als besonders vorteilhaft erwiesen.

Als multifunktionelle Sulfonylazide kommen Verbindungen der allgemeinen Formel (II)

$$R\text{-}(\text{-}SO_2\text{-}N_3)_n \qquad \text{(II)},$$

in Betracht,
wobei

R für einen aliphatischen, araliphatischen oder aromatischen, vorzugsweise für einen aromatischen Rest steht, wobei der aliphatische Rest 1 bis 12 Kohlenstoffatome, der araliphatische Rest 7 bis 20 Kohlenstoffatome und der aromatische Rest 6 bis 36 Kohlenstoffatome enthält und durch Ether-, Thioether-, Sulfon-, Keton-, C=C- oder Esterbrücken oder Stickstoffatome unterbrochen sein kann, und wobei R durch Halogenatome, Estergruppen, Alkoxygruppen oder Aryloxygruppen substituiert sein kann, wobei die Estergruppen, die Alkoxygruppen oder die Aryloxygruppen 1 bis 36 Kohlenstoffatome enthalten können, und

n für eine natürliche Zahl von 2 bis 4, vorzugsweise für 2 steht.

Der Rest R steht bevorzugt für einen Phenylenrest, einen Naphthylenrest oder einen Oxbisphenylenrest.

Beispiele für die funktionellen Sulfonylazide der obiger Formel (II) sind:

1,3-Bisazidosulfonylbenzol, 4,4'-Bisazidosulfonyldiphenylether, 4,4'-Bisazidosulfonylbiphenyl, Bisazidosulfonylnaphthaline in allen denkbaren Substitutionsmustern, 4,4'-Bisazidosulfonyldibenzofuran, 4,4'-Bisazidosulfonyldiphenylsulfid, 4,4'-Bisazidosulfonyldibenzothiophen, 4,4'-Bisazidosulfonylstilben, Trisazidosulfonylnaphthaline in allen denkbaren Substitutionsmustern sowie 2,4,2',4'-Tetrakisazidosulfonyldiphenylether, bevorzugt sind insbesondere 1,3-Bisazidosulfonylbenzol und 4,4'-Bisazidosulfonyldiphenylether.

Die Synthese der erfindungsgemäßen Polysulfonylazide der obigen Formel (II) erfolgt z.B. durch Reaktion von einem Äquivalent des entsprechenden zugrundeliegenden Sulfonsäurehalogenids mit 1 bis 10, vorzugsweise mit 1,1 bis 3, Äquivalenten eines Alkalimetallazids wie Natriumazid ($NaN_3$), Lithiumazid ($LiN_3$) oder Kaliumazid ($KN_3$). In einer bevorzugten Ausführungsform wird die Lösung des Sulfonsäurehalogenids in einem wasserlöslichen, organischen Lösungsmittel, wie Aceton, THF, Dioxan, NMP, DMF, DMA, Glyme und/oder Diglyme, zu einer Lösung des Alkalimetallazids in Wasser getropft und das ausfallende Produkt durch Filtration isoliert.

Die multifunktionellen Sulfonylazide werden in den zuvor beschriebenen Kautschukmischungen üblicherweise in Menge von 0,1 bis 10 Gew.-Teilen, bevorzugt 0,5 bis 7 Gew.-Teilen, bezogen auf 100 Gew.-Teile unvernetzten Kautschuk, eingesetzt.

Die beschriebenen Kautschukmischungen können in bekannter Weise hergestellt werden, beispielsweise durch Vermischen der festen Einzelkomponenten in den dafür geeigneten Aggregaten, wie Walzen, Innenmischern oder Mischextrudem. Die Abmischung der einzelnen Komponenten miteinander erfolgt üblicherweise bei Mischtemperaturen von 20 bis 150°C.

Die Kautschukmischungen können auch hergestellt werden, indem man aus den Latices der unvernetzten Kautschukkomponente die Kautschukgele in Latexform und die anderen Komponenten in die Latexmischung einmischt und anschließend durch übliche Operationen, wie Eindampfen, Ausfällen oder Gefrier-Koagulation, aufarbeitet.

Ziel bei der Herstellung der Kautschukmischung ist vor allem, dass die Mischungskomponenten innig miteinander vermischt werden und eine gute Dispersion der eingesetzten Füllstoffe in der Kautschulanatrix erreicht wird.

Bei Verwendung von multifunktionellen Sulfonylaziden der obigen Formel (II) als zusätzliches Vernetzungsmittel in den Kautschukmischungen erfolgt die Zugabe des Sulfonylazids vorzugsweise zum Ende des Mischzykluses, wobei die Mischungstemperaturen unter 50°C liegen sollten.

Die mit den erfindungsgemäßen vernetzten, durch sekundäre Amino-(meth)-acrylatgruppen modifizierten Kautschukpartikel hergestellten Kautschukformkörper bzw. Kautschukvulkanisate zeichnen sich insbesondere dadurch aus, dass sie verbesserte mechanische Eigenschaften vor allem eine Verbesserung des Produktes aus Spannungswert bei 300 % Dehnung und Bruchdehnung ($\sigma_{300}$ x $\varepsilon_b$) aufweisen, insbesondere wenn für die Vernetzung multifunktionelle Sulfonylazide zusätzlich zu den für eine Schwefelvernetzung üblichen Chemikalien eingesetzt werden und dass in kieselsäurehaltigen Mischungen eine Reduktion der Menge an Bis-(triethoxysilyl-propyl-3)-tetrasulfid durch Verwendung von multifunktionellem Sulfonylazid ohne Einbußen im Produkt $\sigma_{300}$ x $\varepsilon_b$ gelingt sowie dass die Ausvulkanisationsgeschwindigkeit reduziert wird.

## Beispiele

Herstellung von 1,3-Bisazidosulfonylbenzol (1,3-Benzoldisulfonsäurediazid)

Man tropft bei Raumtemperatur innerhalb von 2 h die Lösung von 400 g 1,3-Benzoldisulfonsäuredichlorid in 1,2 1 Aceton zu einer Lösung von 380g Natriumazid in 1,2 1 Wasser. Man lässt 24 h bei Raumtemperatur stehen, filtriert das ausgefallenen Produkt ab und trocknet im Hochvakuum bei Raumtemperatur. Man erhält 396 g des Produktes. Die Struktur wurde durch Elementaranalyse (C:24,8 %, H:1,3 %, N:29,1 %, S:22,3 % und C 10,26 %) bestätigt.

Charakteristische Daten der eingesetzten Gele sind in folgender Tabelle zusammengefasst:

| Gel OBR | Geltyp | DCP [2] [phr] | Durchmesser $\bar{d}_z$ [3] [nm] | Gelgehalt [%] | QI [4] | Tg[5] [°C] | Art der Modifikation |
|---|---|---|---|---|---|---|---|
| 1135 | BR [1] | 2,5 | 120 | 97,8 | 3,7 | -42 | unmodifiziert |
| 1131 C | BR[1] | 2,5 | 114 | 96,4 | 4,8 | -39,5 | $^{t}$BAEMA[6] (5 phr) |
| 1137 | BR[1] | 2,5 | 119 | 96,7 | 3,8 | -44 | $^{t}$BAEMA[6] (5 phr) |
| 1) Polybutadien | | | | | | | |
| 2) Dicumylperoxid | | | | | | | |

Tabelle fortgesetzt

3) Der Teilchendurchmesser wird mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8). Der Durchmesser $\overline{d}_z$ ist nach DIN 53 206 als der Median- oder Zentralwert definiert, oberhalb und unterhalb dessen, jeweils die Hälfte aller Teilchengrößen liegt.

4) Quellungsindex

5) Glastemperatur

6) 2-(tert-Butylamino)-Ethylmethacrylat

Die Vernetzung der Kautschuklatices mit Dicumylperoxid (DCP) für die Herstellung der BR-Gele OBR 1135, 1131 C und 1137 erfolgte wie in US 5,395,891 beschrieben, wobei jeweils 2,5 phr DCP eingesetzt wurden.

Die Pfropfung der mit DCP vernetzten Gele OBR 1131 C und OBR 1137 mit 5 phr + BAEMA erfolgte wie in DE 199 459.9, Gelbezeichnung 1b, "Pfropfung der in Latexform vorliegenden Kautschuke", wobei anstelle von Hydroxyethylmethacrylat (HEMA) t-BAEMA (2-(tert.-Butylamino)-Ethylmethacrylat eingesetzt wurde.

Die Stabilisierung und Aufarbeitung der Gele OBR 1135, 1131 C und 1137 erfolgte wie in DE 199 459.9, Punkt 1c, "Stabilisierung und Aufarbeitung der hydroxylmodifizierten Mikrogele" beschrieben.

Auf der Basis o. g. Gele werden folgende Mischungen hergestellt und die Eigenschaften der entsprechenden Vulkanisate bestimmt:

Mischungsserie A:

Folgende Bestandteile werden in der angegebenen Reihenfolge in einem Innenmischer gemischt, wobei gegen Ende des Mischzyklus die Temperatur 5 Min. bei 160°C gehalten wird:

| Mischungs-Nr.: | 1 | 2 | 3 | 4 |
|---|---|---|---|---|
| TSR Mastizierter Naturkautschuk[1] | 100 | 100 | 100 | 100 |
| OBR 1131 C | - | - | 30 | 30 |
| Stearinsäure | 3 | 3 | 3 | 3 |
| Zinkoxid | 3 | 3 | 3 | 3 |
| Ozonschutzwachs[2] | 1,5 | 1,5 | 1,5 | 1,5 |
| IPPD[3] | 1 | 1 | 1 | 1 |
| TMQ[4] | 1 | 1 | 1 | 1 |
| Enerthene 1849-1[5] | 3 | 3 | 3 | 3 |

Nach dem Abkühlen der Mischung werden folgende Compoundbestandteile bei <50°C auf der Walze eingemischt:

| | | | | |
|---|---|---|---|---|
| Schwefel | 1,6 | 1,6 | 1,6 | 1,6 |
| Vulkacit NZ[6] | 2 | 2 | 2 | 2 |
| Multifunktionelles Sulfonylazid[7] | - | 2,5 | - | 2,5 |

1) TSR 5, Defo 700

2) Mischung von Paraffinen und Mikrowachsen (Antilux® 654 der Rheinchemie Rheinau GmbH)

3) N-Isopropyl-N'-phenyl-p-phenylendiamin (Vulkanox® 4010 NA der Bayer AG)

4) 2,2,4-Trimethyl-1,2-dihydrochinolin (polym.) Vulkanox® HS der Bayer AG

Tabelle fortgesetzt

| |
|---|
| 5) Weichmacher auf Mineralölbasis (Enerthene® 1849-1 der Firma BP Oil GmbH) |
| 6) N-tert.Butyl-2-benzthiazylsulfenamid (Vulkacit NZ® der Bayer AG) |
| 7) 1,3-Benzoldisulfonsäurediazid (KBD 9508) |

Das Vulkanisationsverhalten der Mischungen wird im Rheometer bei 160°C nach DIN 53 529 mit Hilfe des Monsantorheometers MDR 2000E untersucht. Auf diese Weise wurden charakteristische Daten wie $F_a$, $F_{max}$, $F_{max.}$-$F_a$, $t_{10}$, $t_{50}$, $t_{90}$ und $t_{95}$ bestimmt.

| Mischungs-Nr.: | 1 | 2 | 3 | 4 |
|---|---|---|---|---|
| $F_a$ [dNm] | 0,66 | 0,81 | 0,88 | 1,07 |
| $F_{max}$ [dNm] | 8,16 | 7,26 | 11,68 | 10,67 |
| $F_{max}$ - $F_a$ [dNm] | 7,50 | 6,45 | 10,80 | 9,60 |
| $t_{10}$ [min.] | 5,02 | 0,68 | 7,73 | 0,71 |
| tso [min.] | 5,86 | 5,75 | 8,9 | 7,27 |
| $t_{90}$ [min] | 8,73 | 7,13 | 11,85 | 9,02 |

Nach DIN 53 529, Teil 3 bedeuten:

| | |
|---|---|
| $F_a$: | Vulkameteranzeige im Minimum der Vernetzungsisotherme |
| $F_{max}$: | Maximum der Vulkameteranzeige |
| $F_{max}$ - $F_a$: | Differenz der Vulkameteranzeigen zwischen Maximum und Minimum |
| $t_{10}$: | Zeit, bei der 10% des Umsatzes erreicht sind |
| $t_{50}$: | Zeit, bei der 50% des Umsatzes erreicht sind |
| $t_{90}$: | Zeit, bei der 90% des Umsatzes erreicht sind |
| $t_{95}$: | Zeit, bei der 95% des Umsatzes erreicht sind |

Die Mischungen wurden in der Presse unter einem Hydraulikdruck von 120 bar bei 160°C vulkanisiert. Die Heizzeiten für die verschiedenen Compounds finden sich in beiliegender Tabelle:

| Mischtings-Nr.: | 1 | 2 | 3 | 4 |
|---|---|---|---|---|
| Heizzeit [min] | 14 | 14 | 17 | 15 |

An den Vulkanisaten wurden folgende Prüfwerte bestimmt:

| Mischungs-Nr.: | 1 | 2 | 3 | 4 |
|---|---|---|---|---|
| Zugfestigkeit ($\sigma_{max.}$) DIN 53504 [MPa] | 19,7 | 1,5 | 27,6 | 26,4 |
| Bruchdehnung ($\varepsilon_b$) DIN 53504 [%] | 609 | 193 | 633 | 573 |
| Spannungswert bei 25% Dehnung ($\sigma_{25}$) DIN 53504 [MPa] | 0,64 | 0,75 | 0,93 | 0,57 |
| Spannungswert bei 100% ($\sigma_{100}$) DIN 53504 Dehnung [MPa] | 0,94 | 1,05 | 1,39 | 1,52 |
| Spannungswert bei 200% Dehnung ($\sigma_{200}$) DIN 53504 [MPa] | 1,51 | 1,49 | 2,90 | 3,51 |
| Spannungswert bei 300% Dehnung ($\sigma_{300}$) DIN 53504 [MPa] | 2,36 | 2,33 | 5,67 | 7,32 |
| Härte Shore A, 23°C DIN 53505 | 40,5 | 42,1 | 50,7 | 52,0 |
| Härte Shore A, 70°C DIN 53505 | 40,5 | 40,0 | 48,0 | 48,5 |
| Rückprallelastizität, 23°C ($R_{23}$) DIN 53512 [%] | 78 | 73,9 | 61,3 | 64,2 |
| Rückprallelastizität, 70°C ($R_{23}$) DIN 53512 [%] | 81,9 | 81,3 | 72,5 | 74,1 |

Tabelle fortgesetzt

| Mischungs-Nr.: | 1 | 2 | 3 | 4 |
|---|---|---|---|---|
| $\sigma_{300}$ x $\varepsilon_b$ [MPa x %] | 1437 | 450 | 3589 | 4194 |

**Ergebnis:**

In der Mischungsserie A wird gezeigt, dass durch den Zusatz von erfindungsgemäßem Gel die mechanischen Eigenschaften $\sigma_{25}$, $\sigma_{100}$, $\sigma_{200}$, $\sigma_{300}$, $\sigma$ max., $\varepsilon_b$ und das Produkts aus Spannungswert bei 300 % Dehnung und Bruchdehnung ($\sigma_{300}$ x $\varepsilon_b$) verbessert werden. Außerdem wird die Verarbeitungssicherheit ($t_{10}$) verbessert. (Mischungs-Nr. 1 und 3). Durch Vergleich der Mischungen 3 und 4 wird des weiteren gezeigt, dass durch Kombination von erfindungsgemäßem Gel mit multifimktionellem Sulfonylazid eine weitere Verbesserung des Produkts $\sigma_{300}$ x $\varepsilon_b$ gelingt und dass die Ausvulkanisationsgeschwindigkeit ($t_{90}$) reduziert wird.

**Mischungsserie B**

Folgende Bestandteile wurden in der angegebenen Reihenfolge in einem Innenmischer gemischt, wobei gegen Ende des Mischzyklus die Temperatur 5 Min. bei 160°C gehalten wurde:

| Mischungs-Nr.: | 1 | 2 | 3 | 4 | 5 | 6 |
|---|---|---|---|---|---|---|
| TSR 5 | 100 | 100 | 100 | 100 | 100 | 100 |
| OBR 1135 | - | - | 30 | 30 | - | - |
| OBR 1137 | - | - | - | -- | 30 | 30 |
| Stearinsäure | 3 | 3 | 3 | 3 | 3 | 3 |
| Zinkoxid | 3 | 3 | 3 | 3 | 3 | 3 |
| Antilux 654 | 1,5 | 1,5 | 1,5 | 1,5 | 1,5 | 1,5 |
| Vulkanox 4010 | 1 | 1 | 1 | 1 | 1 | 1 |
| Vulkanox HS | 1 | 1 | 1 | 1 | 1 | 1 |
| Enerthene 1849-1 | 3 | 3 | 3 | 3 | 3 | 3 |

Folgende Bestandteile wurden in die auf <50°C abgekühlte Mischung auf der Walze eingemischt:

| Mischungs-Nr.: . | 1 | 2 | 3 | 4 | 5 | 6 |
|---|---|---|---|---|---|---|
| KBD 9508 | - | 5 | | 5 | - | 5 |
| Schwefel | 1,6 | 1,6 | 1,6 | 1,6 | 1,6 | 1,6 |
| Vulkacit NZ | 2 | 2 | 2 | 2 | 2 | 2 |

Das Vulkanisationsverhalten der Mischungen wurde im Rheometer bei 160°C nach DIN 53 529 mit Hilfe des Monsantorheometers MDR 2000E untersucht. Auf diese Weise wurden charakteristische Daten wie $F_a$, $F_{max}$, $F_{max.}$-$F_a$, $t_{10}$, $t_{50}$, $t_{90}$ und $t_{95}$ bestimmt.

| Mischungs-Nr.: | 1 | 2 | 3 | 4 | 5 | 6 |
|---|---|---|---|---|---|---|
| $F_a$ [dNm] | 0,2 | 0,3 | 0,4 | 0,5 | 0,4 | 0,4 |
| $F_{max}$ [dNm] | 7,4 | 6,9 | 11,6 | 7,4 | 11,4 | 9,4 |
| $F_{max}$ - $F_a$ [dNm] | 7,2 | 6,6 | 11,2 | 6,9 | 11,0 | 9,0 |
| $t_{10}$ [min.] | 5,2 | 0,7 | 7,4 | 0,6 | 5,4 | 0,6 |
| $t_{80}$ [min.] | 7,2 | 4,2 | 10,6 | 1,7 | 7,8 | 4,1 |

Tabelle fortgesetzt

| Mischungs-Nr.: | 1 | 2 | 3 | 4 | 5 | 6 |
|---|---|---|---|---|---|---|
| $t_{90}$ [min] | 8,4 | 4,6 | 12,4 | 2,0 | 9,2 | 4,5 |
| $t_{95}$ [min] | 9,6 | 4,9 | 14,3 | 6,6 | 10,6 | 4,8 |

Die Mischungen wurden in der Presse unter einem Hydraulikdruck von 120 bar bei 160°C vulkanisiert. Die Heizzeiten für die verschiedenen Mischungen wurden entsprechend den $t_{95}$-Zeiten festgesetzt. An den Vulkanisaten wurden folgende Prüfwerte bestimmt:

| Mischungs-Nr.: | 1 | 2 | 3 | 4 | 5 | 6 |
|---|---|---|---|---|---|---|
| Zugfestigkeit ($\sigma_{max.}$) DIN 53504 [MPa] | 18,4 | 2,1 | 28 | 9,4 | 27,1 | 22,1 |
| Bruchdehnung ($\varepsilon_b$) DIN 53504 [%] | 630 | 225 | 660 | 335 | 660 | 505 |
| Spannungswert bei 25 % ($\sigma_{25}$) DIN 53504 Dehnung [MPa] | 0,5 | 0,6 | 0,9 | 1,0 | 0,8 | 1,1 |
| Spannungswert bei 100 % ($\sigma_{100}$) DIN 53504 Dehnung [MPa] | 0,8 | 1,0 | 1,4 | 1,6 | 1,3 | 1,8 |
| Spannungswert bei 200 % Dehnung ($\sigma_{200}$) DIN 53504 [MPa] | 1,3 | 1,8 | 2,9 | 3,6 | 2,7 | 4,2 |
| Spannungswert bei 300 % Dehnung ($\sigma_{300}$) DIN 53504 [MPa] | 2,0 | | 5,4 | 6,6 | 5,2 | 8,5 |
| Härte Shore A bei 23°C (DIN 53505) | 40 | 45 | 52 | 57 | 51 | 55 |
| Härte Shore A bei 70° (DIN 53505C) | 41 | 44 | 48 | 52 | 48 | 52 |
| Rückprallelastizität bei 23°C ($R_{23}$) DIN 53512 [%] | 75 | 74 | 59 | 64 | 60 | 64 |
| Rückprallelastizität bei 70°C ($R_{70}$) DIN 53512 [%] | 87 | 85 | 72 | 75 | 72 | 74 |
| $\sigma_{300}$ x $\varepsilon_b$ [MPa x %] | 1260 | - | 3564 | 2211 | 3432 | 4293 |

**Ergebnis:**

In der Mischungsserie B wird gezeigt, dass im Gegensatz zur Kombination von unmodifiziertem Gel mit multifunktionellem Sulfonylazid (Mischungen 3 und 4) bei Kombination des erfindungsgemäßen Gels mit multifunktionellem Sulfonylazid (Mischungen 5 und 6) die Verbesserung des Produktes aus Spannungswert bei 300 % Dehnung und Bruchdehnung ($\sigma_{300}$ x $\varepsilon_b$) sowie eine Reduktion der Ausvulkanisationsgeschwindigkeit ($t_{95}$) gelingt.

**Mischungsserie C**

Folgende Bestandteile wurden in der angegebenen Reihenfolge in einem Innenmischer gemischt, wobei gegen Ende des Mischzyklus die Temperatur 3 Min. bei 160°C gehalten wurde:

| Mischnngs-Nr.: . | 1 | 2 | 3 |
|---|---|---|---|
| TSR 5 | 100 | 100 | 100 |
| Kieselsäure [9)] | 40 | 40 | 40 |
| Ruß N 330 | 2 | 2 | 2 |
| Si 69 [10)] | 6 | 6 | 3,2 |
| Enerthene 1849-1 | 5 | 5 | 5 |
| Zinkoxid | 5 | 5 | 5 |
| Stearinsäure | 3 | 3 | 3 |
| Vulkanox HS | 1 | 1 | 1 |
| Vulkanox 4010 | 0,75 | 0,75 | 0,75 |

Folgende Bestandteile wurden in die auf <50°C abgekühlte Mischung auf der Walze eingemischt:

| Mischungs-Nr.: | 1 | 2 | 3 |
|---|---|---|---|
| OBR 1137 | 35 | 35 | 35 |
| Schwefel | 2,8 | 2,8 | 2,8 |
| Vulkacit NZ | 2 | 2 | 2 |
| Vulkacit D [11] | 0,8 | 0,8 | 0,8 |
| KBD 9508 | - | 2,5 | 2,5 |

[8] Kieselsäure (Typ VN 2 der Degussa AG)

[9] Ruß (Typ N 330 der Degussa AG)

[10] Bis-(triethoxysilyl-propyl-3)tetrasulfid (Si® 69 der Degussa AG)

[11] Diphenylguanidin (Vulkacit® D der Bayer AG)

Das Vulkanisationsverhalten der Mischungen wurde im Rheometer bei 160°C nach DIN 53 529 mit Hilfe des Monsantorheometers MDR 2000E untersucht. Auf diese Weise wurden charakteristische Daten wie $F_a$, $F_{max}$, $F_{max.}$-$F_{a}$., $t_{10}$, $t_{50}$ und $t_{90}$ bestimmt.

| Mischungs-Nr.: | 1 | 2 | 3 |
|---|---|---|---|
| $F_a$ [dNm] | 1,94 | 1,83 | 2,27 |
| $F_{max}$ [dNm] | 34,5 | 28,8 | 27,2 |
| $F_{max}$ - $F_a$ [dNm] | 34,2 | 28,5 | 25,9 |
| $t_{10}$ [min.] | 2,94 | 0,94 | 0,84 |
| $t_{80}$ [min.] | 6,79 | 5,59 | 5,08 |
| $t_{90}$ [min] | 9,52 | 7,56 | 6,15 |
| $t_{95}$ [min] | 12,2 | 9,8 | 7,4 |

Die Mischungen wurden in der Presse unter einem Hydraulikdruck von 120 bar bei 160°C vulkanisiert. Die Heizzeiten für die verschiedenen Mischungen wurden entsprechend den $t_{95}$-Zeiten festgesetzt. An den Vulkanisaten wurden folgende Prüfwerte bestimmt:

| Mischungs-Nr.: | 1 | 2 | 3 |
|---|---|---|---|
| Zugfestigkeit ($\sigma_{max.}$) DIN 53504 [MPa] | 14,1 | 18,3 | 21,6 |
| Bruchdehnung ($\varepsilon_b$) DIN 53504 [%] | 195 | 258 | 334 |
| Spannungswert bei 50% ($\sigma_{25}$) DIN 53504 Dehnung [MPa] | 3,4 | 3 | 2,7 |
| Spannungswert bei 100% ($\sigma_{100}$) DIN 53504 Dehnung [MPa] | 6,4 | 6 | 5,3 |
| Spannungswert bei 200% Dehnung ($\sigma_{200}$) DIN 53504 [MPa] | 14,5 | 13,9 | 12,6 |
| Spannungswert bei 300% Dehnung ($\sigma_{300}$) DIN 53504 [MPa] | - | - | 19,7 |
| Härte Shore A bei 23°C (DIN 53505) | 79,9 | 77,2 | 76 |
| Härte Shore A bei 70° (DIN 53505C) | 76,7 | 72,7. | 71 |
| Rückprallelastizität bei 23°C ($R_{23}$) DIN 53512 [%] | 46,7 | 48,4 | 48 |
| Rückprallelastizität bei 70°C ($R_{70}$) DIN 53512 [%] | 64 | 65,5 | 66 |
| $\sigma_{200}$ x $\varepsilon_b$ [MPa x %] | 2828 | 3586 | 4208 |

**Ergebnis:**

In der Mischungsserie C wird gezeigt, dass in einem Compound, der erfindungsgemäßes Gel, Kieselsäure und Bis-(triethoxysilyl-propyl-3)-tetrasulfid enthält, durch den Zusatz von multifunktionellem Sulfonazid eine Verbesserung der Reißfestigkeit, der Bruchdehnung und des Produktes $\sigma_{300}$ x $\varepsilon_b$ und eine Verkürzung der Ausvulkanisationszeit ($t_{95}$) gelingt (Mischungen 1 und 2), sowie dass durch den Zusatz von multifunktionellem Sulfonylazid bei gleichzeitiger Reduktion der Menge an Bis-(triethoxysilyl-propyl-3)tetrasulfid eine Verbesserung des Produkts $\sigma_{300}$ x $\varepsilon_b$ sowie eine weitere Reduktion der Ausvulkanisationszeit ($t_{95}$) möglich ist.

**Patentansprüche**

1. Vernetzte durch sekundäre Amino-(meth)-acrylatgruppen modifizierte Kautschukpartikel, **gekennzeichnet durch** einen Teilchendurchmesser von 5 bis 500 nm, einen Quellungsindex in Toluol von 1 bis 25, einen Gelgehalt von 80 bis 100 Gew.-% und einer Menge an sekundären Amino-(meth)-acrylatgruppen von 0,5 bis 10. Gew.-% bezogen auf das Gesamtgewicht des Kautschukpartikels.

2. Vernetzte und sekundäre Amino-(meth)-acrylatgruppen nach Anspruch 1, **dadurch gekennzeichnet, dass** sie einen Teilchendurchmesser im Bereich von 10 bis 500 nm, einen Quellungsindex im Bereich von 1 bis 25, einen Gelgehalt von 80 bis 100 Gew.% und eine Menge an sekundären Amino-(meth)-acrylatgruppen von 0,5 bis 10 Gew.% besitzen.

3. Vernetzte und sekundäre Amino-(meth)-acrylatgruppen nach einem der Ansprüche 1 bis 2, **dadurch gekennzeichnet, dass** sei einen Teilchendurchmesser im Bereich von 20 bis 400 nm, einen Quellungsindex im Bereich von 1 bis 15, einen Gelgehalt von 90 bis 100 Gew.-% und eine Menge an sekundären Amino-(meth)-acrylatgruppen von 1 bis 5 Gew.-% besitzen.

4. Verfahren zur Herstellung der Kautschukpartikel nach Anspruch 1, **dadurch gekennzeichnet, dass** die Kautschukpartikel durch Direktpolymerisation sowie durch Modifikation von in wässriger Dispersion vorliegenden Kautschukdispersionen hergestellt werden.

5. Verfahren zur Herstellung der Kautschukpartikel nach Anspruch 4, **dadurch gekennzeichet, das** die Kautschukpartikel durch Direktpolymerisation mit A) 10 bis 90 Gew.-Teilen an Dienen, B) 0 bis 70 Gew.-Teilen an Monovinylverbindungen, C) 5-20 Gew.-Teilen an multivinylhaltigen Monomeren und D) 0,5 bis 20 Gew.-Teilen an Amino-(meth)acyrlaten umgesetzt werden.

6. Verfahren zur Herstellung der Kautschukpartikel nach Anspruch 4, **dadurch gekennzeichnet, dass** die Kautschukpartikel durch Modifikation von in wässriger Dispersion vorliegenden Kautschukdispersionen mit einer Verbindung umgesetzt werden, die eine vernetzende Wirkung auf den un- und/oder schwach vernetzten Kautschuk hat und anschließend dieser vernetzte Kautschuk-Latex mit dem sekundären Amino-(meth)-acrylatsäureester und einem Radikalbildner umgesetzt wird.

7. Verwendung der Kautschukpartikel nach Anspruch 1 zur Herstellung von Kautschukvulkanisaten oder Kautschukformkörpern aller Art, insbesondere zur Herstellung von Reifen, Reifenbauteilen und technischen Gummiartikeln.

8. Reifen und Reifenbauteile erhältlich durch vulkanisieren einer Kautschukmischung die die Kautschukpartikel nach Anspruch 1 enthalten.

9. Technische Gummiartikel erhältlich durch Verwendung der Kautschukpartikel nach Anspruch 1.

**Claims**

1. Crosslinked rubber particles modified by secondary amino-(meth)-acrylate groups, **characterised by** a particle diameter of 5 to 500 nm, a swelling index in toluene of 1 to 25, a gel content of 80 to 100 wt.% and a quantity of secondary amino-(meth)-acrylate groups of 0.5 to 10 wt.% in relation to the total weight of the rubber particle.

2. Crosslinked and secondary amino-(meth)-acrylate groups according to claim 1, **characterised in that** they have a

particle diameter in the range of 10 to 500 nm, a swelling index in the range of 1 to 25, a gel content of 80 to 100 wt.% and a quantity of secondary amino-(meth)-acrylate groups of 0.5 to 10 wt.%.

**3.** Crosslinked and secondary amino-(meth)-acrylate groups according to one of claims 1 to 2, **characterised in that** they have a particle diameter in the range of 20 to 400 nm, a swelling index in the range of 1 to 15, a gel content of 90 to 100 wt.% and a quantity of secondary amino-(meth)-acrylate groups of 1 to 5 wt.%.

**4.** Process for the production of the rubber particles according to claim 1, **characterised in that** the rubber particles are produced by direct polymerisation and by modification of rubber dispersions present in aqueous dispersion.

**5.** Process for the production of the rubber particles according to claim 4, **characterised in that** the rubber particles are reacted by direct polymerisation with A) 10 to 90 parts by weight of dienes, B) 0 to 70 parts by weight of monovinyl compounds, C) 5-20 parts by weight of multivinyl-containing monomers and D) 0.5 to 20 parts by weight of amino-(meth)-acrylates.

**6.** Process for the production of the rubber particles according to claim 4, **characterised in that** the rubber particles are reacted, by modifying rubber dispersions present in aqueous dispersion, with a compound that has a crosslinking action on the un- and/or slightly crosslinked rubber and this crosslinked rubber-latex is then reacted with the secondary amino-(meth)-acrylic acid ester and a radical former.

**7.** Use of the rubber particles according to claim 1 to produce rubber vulcanisates or rubber moulded bodies of all kinds, in particular for the production of tyres, tyre components and industrial rubber articles.

**8.** Tyres and tyre components that can be obtained by vulcanising a rubber blend that contains the rubber particles according to claim 1.

**9.** Industrial rubber articles that can be obtained by using the rubber particles according to claim 1.

## Revendications

**1.** Particules de caoutchouc réticulées et modifiées par des groupes amino-(méth)-acrylates secondaires, **caractérisées par** un diamètre de particule de 5 à 500 nm, un indice de gonflement dans le toluène de 1 à 25, une teneur en gel de 80 à 100 % en poids et une quantité de groupes amino-(méth)-acrylates secondaires de 0,5 à 10 % du poids total des particules.

**2.** Particules de caoutchouc réticulées et modifiées par des groupes amino-(méth)-acrylates secondaires, **caractérisées en ce qu'**elles ont un diamètre de particule de 10 à 500 nm, un indice de gonflement de 1 à 25, une teneur en gel de 80 à 100 % en poids et une quantité de groupes amino-(méth)-acrylates secondaires de 0,5 à 10 % en poids.

**3.** Particules de caoutchouc réticulées et modifiées par des groupes amino-(méth)-acrylates secondaires, **caractérisées en ce qu'**elles ont un diamètre de particule dans l'intervalle de 20 à 400 nm, un indice de gonflement de 1 à 15, une teneur en gel de 90 à 100 % en poids et une quantité de groupes amino-(méth)-acrylates secondaires de 1 à 5 % en poids.

**4.** Procédé pour la préparation des particules de caoutchouc selon la revendication 1, **caractérisé en ce que** l'on prépare les particules de caoutchouc par polymérisation directe puis on procède à la modification des particules de caoutchouc en dispersion aqueuse.

**5.** Procédé pour la préparation des particules de caoutchouc selon revendication 4, **caractérisé en ce que** l'on fait réagir les particules de caoutchouc par polymérisation directe avec A) 10 à 90 parties en poids de diènes, B) 0 à 70 parties en poids de composés monovinyliques, C) 5 à 20 parties en poids de monomères multivinyliques et D) 0,5 à 20 parties en poids d'amino-(méth)-acrylates.

**6.** Procédé pour la préparation des particules de caoutchouc selon la revendication 4, **caractérisé en ce que** l'on fait réagir les particules de caoutchouc par modification des particules de caoutchouc en dispersion aqueuse avec un composé qui a un effet réticulant sur le caoutchouc non réticulé et/ou faiblement réticulé puis on fait réagir le latex de caoutchouc réticulé avec l'ester amino-(méth)-acrylique secondaire et un inducteur radicalaire.

7. Utilisation des particules de caoutchouc selon revendication 1 pour la fabrication de vulcanisats de caoutchouc ou d’objets moulés en caoutchouc de tous types, en particulier pour la fabrication de pneumatiques, de parties de pneumatiques et d’articles industriels en caoutchouc.

8. Pneumatiques et parties de pneumatiques obtenus par vulcanisation d’une composition de caoutchouc contenant les particules de caoutchouc selon revendication 1.

9. Articles industriels en caoutchouc obtenus avec utilisation des particules de caoutchouc selon revendication 1.